# EUROPÄISCHE PATENTANMELDUNG

(11) **EP 3 075 770 A1**
(43) Veröffentlichungstag der Anmeldung: **05.10.2016**
(21) Anmeldenummer: 15161905.3
(22) Anmeldetag: 31.03.2015
(51) Int. Cl.: C08J 9/00, C08K 3/36, C08L 33/12, C08F 20/14

(54) **Herstellung feinporiger pmma-schäume mittels verwendung von nukleierungsmitteln**

(71) Anmelder: Evonik Röhm GmbH, 64293 Darmstadt (DE)
(72) Erfinder: RICHTER, Thomas, 64293 Darmstadt (DE); SEIPEL, Christoph, 64846 Gross-Zimmern (DE); BERNHARD, Kay, 64291 Darmstadt (DE); KRISHHNAMOORTHY, Sivakumara K., 64347 Griesheim (DE); BÜHLER, Sebastian, 79104 Freiburg (DE)

(57) **Zusammenfassung**

Die vorliegende Erfindung betrifft neuartige, feinporige PMMA-Schäume, sowie deren Herstellung. Dabei werden bei der Herstellung Rezepturen eingesetzt, die neben geeigneten Treibmitteln Nukleierungsmittel aufweisen. Dabei konnte überraschend festgestellt werden, dass erfindungsgemäß ein stabiler, einfach herzustellender PMMA-Schaum mit sehr feinen Poren und sehr guten Eigenschaften erhalten werden kann.

## Beschreibung

### Gebiet der Erfindung

Die vorliegende Erfindung betrifft neuartige, feinporige PMMA-Schäume, sowie deren Herstellung. Dabei werden bei der Herstellung Rezepturen eingesetzt, die neben geeigneten Treibmitteln Nukleierungsmittel aufweisen. Dabei konnte überraschend festgestellt werden, dass erfindungsgemäß ein stabiler, einfach herzustellender PMMA-Schaum mit sehr feinen Poren und sehr guten Eigenschaften erhalten werden kann.

### Stand der Technik

Polymerhartschaumstoffe sind allgemein bekannt und finden Anwendung in unterschiedlichsten Bereichen wie z.B. als Isolationsmaterial, in Verpackungen sowie im Leichtbau. Speziell im Bereich des Leichtbaus sollten die Schaumstoffe hohe Festigkeiten bei geringer Dichte aufweisen. Verwendung finden hier unter anderem PVC-, PET-, spezielle PU- und P(M)I-(Poly(meth)acrylimid-)Schaumstoffe, die unter anderem als Kernmaterial in Sandwichkompositen Anwendung finden.

PMMA Schaumstoffe sind in der Literatur oft beschrieben, haben aber bis dato wenig bis keine industriellen Bedeutung erlangt. Ein Grund hierfür ist die häufig beschriebene, aber sehr komplizierte Herstellung über Autoklavenverfahren, bei welchen PMMA mit gasförmigen Treibmitteln, wie z.B. CO₂ oder N₂, unter hohen Drücken im Autoklaven beladen und dann bei Druckentspannung expandiert wird. PMMA Hartschaumstoffe die mit einem Treibmittel geschäumt werden, welches vor der Polymerisation zum Monomer zugegeben wird und nach der Polymerisation gelöst im Polymer vorliegt, sind dagegen wenig beschrieben. Dennoch wären PMMA-Schäume aufgrund ihrer Festigkeit und der hohen Witterungsstabilität sehr interessante Werkstoffe für den Leichtbau. Insbesondere besteht dabei ein Interesse an sehr feinporigen PMMA-Schaumstoffen. Solche Materialien sollten eine besondere Festigkeit bei gleichzeitig geringem Gewicht und anderen guten mechanischen Eigenschaften aufweisen.

Sekisui beschreibt in einer Reihe von Anmeldungen die Herstellung von sogenannten "Acrylic Foams" (z.B. JP 48043054, JP 2002003635, JP 2006045256, JP 2012201704, JP 2012201705, JP 2013075935). In diesen Anmeldungen werden jedoch, zusätzlich zu MMA, deutliche Mengen von Styrol und/oder Methacrylamiden als Comonomere beschrieben. Als Treibmittel dient vornehmlich Harnstoff. Harnstoff als Treibmittel kann jedoch zu Problemen aufgrund einer schlechten Löslichkeit in der Monomermischung führen, was wiederum zu Inhomogenität im Schaum führen kann und die Bildung kleiner Poren ausschließt. In der JP 2010018647 werden als einzige Referenz in den gennannten Anmeldungen Porengrößen zwischen 1 und 2 mm angegeben. Ein weiterer Nachteil von Harnstoff als Treibmittel ist, dass dieser durch seine Zersetzung zu CO und NH₃ als Treibmittel wirkt. Das bedeutet, dass die Schäumtemperatur immer oberhalb der Zersetzungstemperatur von Harnstoff liegen muss und so nur eine sehr schlechte Einstellbarkeit der Schäumtemperatur gegeben ist. Weiterhin sind NH₃ und CO toxisch. Darüber hinaus weisen diese Schaumstoffe grundsätzlich relevante Mengen Styrol und/oder Methacrylamid als Comonomere bei der Herstellung auf.

In JP 55139433 wird die Herstellung eines Schaumstoffes beschrieben, der als Comonomer zwischen 4 und 35 Gew% Acryl- bzw. Methacrylsäure, sowie Harnstoff und Wasser als Treibmittel enthält. Dabei handelt es sich nicht im eigentlichen Sinne um einen PMMA-Schaum. Angaben zur Porengröße liegen nicht vor, sind aufgrund des verwendeten Harnstoffs jedoch gleichfalls als eher groß zu erwarten.

In US 4,816,492 ist die Herstellung von (Meth)acrylat-basierten Schäumen beschrieben, wobei die Monomermischung in Gegenwart von Treibmitteln polymerisiert wird. Als Treibmittel werden halogenierte Kohlenwasserstoffe verwendet. Das Arbeiten mit halogenierten Kohlenwasserstoffen hat jedoch das Problem, dass diese einen stark negativen Einfluss auf die Ozonschicht haben und damit deutlichen Einschränkungen unterliegen. Außerdem sind die Freiheitsgrade des Schäumungsprozesses eingeschränkt, so dass nur begrenzt und jeweils abhängig von einander die Porengrößen, die Porenverteilung und die Schaumdichte eingestellt werden können. Die Porengrößen werden mit größer 1 mm angegeben.

In IL 62693A und EP 0 032 720 wird die Herstellung von einem gezielt sehr grobporigen, geschäumten PMMA beschrieben. Die Herstellung erfolgt über Quellung von treibmittelhaltigen PMMA-Perlpolymerisaten in MMA und das anschließende Expandieren und Polymerisieren, wobei die Expansion vor der Aushärtung stattfindet. Das Treibmittel ist so gewählt, dass es bei einer Temperatur zum Aufschäumen der treibmittelbeladenen PMMA Perlen führt, die unterhalb der Temperatur liegt, die zur Polymerisation des noch flüssigen Reaktionsharzes führt. Der Fokus liegt hierbei auf der Herstellung eines transparenten, geschäumten Kunststoffes. Ein Problem ist bei diesem Verfahren, dass die Polymerisation zum Zeitpunkt der Schäumung noch nicht abgeschlossen ist und damit eine Stabilisierung der Poren nur in sehr engen Prozessparametergrenzen gelingt. Daraus ergeben sich sehr grobe Poren mit einem Durchmesser mehrerer Millimeter und einer großen Porengrößenverteilung.

In EP 0 068 439 ist die Herstellung von PMMA basierten Schäumen durch die Polymerisation von MMA in Gegenwart eines Treibmittels und anschließendes Schäumen offenbart. Hervorzuheben ist hier, dass explizit ein Plastifizierungsmittel, insbesondere Methacrylsäureester mit mindestens drei Kohlenstoffatomen in der Alkylgruppe, in Mengen zwischen 5 und 40 Gewichtsteilen bezogen auf MMA eingesetzt werden, um Schäume zu erhalten. Als Treibmittel werden Kohlenwasserstoffe und/oder Fluorkohlenwasserstoffe angegeben. Ziel ist es, Schaumstoffe herzustellen, die große Poren von z.B. etwa 5 mm Durchmesser haben und somit die Transparenz des Basispolymers im Unterschied zu feinporigeren Schäumen erhalten bleibt. Die längerkettigen Alkylreste haben jedoch eine weichmachende Wirkung auf das Matrixpolymer, welches insbesondere für Hartschaumanwendungen aus mechanischen Gründen nicht gewünscht wird. Weiterhin werden auch halogenierte Kohlenwasserstoffe als Treibmittel beschrieben. Auch ist die Lehre der EP 0 068 439 nur auf sehr große Zellen in der Schaummatrix beschränkt.

In FR 1423844 wiederum ist die Herstellung von Blasen enthaltendem PMMA beschrieben, wobei als Treibmittel AIBN dient, welches gleichzeitig den Initiator für die Polymerisation darstellt. Durch die damit begründete hohe Konzentration an Initiator ist die Molmasse des Matrixpolymers im Schaum sehr niedrig. Diese wirkt sich wiederum negativ auf die mechanischen Eigenschaften des Schaums aus. Die in den Beispielen erwähnten Schäume besitzen jedoch nur eine geringe Anzahl von ungleichmäßig verteilten Poren. Auch sind die erhaltenen Dichten nicht aufgeführt.

Die Feinporigkeit eines PMMA-Schaumstoffs wäre für verschiedene Anwendungen von hoher Bedeutung. In Isolationsanwendungen steigt gemeinhin bei gleicher Dichte und gleichem Zellgas die Isolationswirkung mit sinkender Porengröße eines Schaumstoffs. In Leichtbauanwendungen, in denen harzgetränkte Deckschichten auf einen Schaumkern aufgebracht werden, ist eine geringe Harzaufnahme des Schaumkernes zur Gewichtseinsparung von Bedeutung. Je Feiner die Poren des hierfür verwendeten geschlossenzelligen Schaumstoffes sind, desto weniger Harz kann aufgenommen werden. Jedoch sind im Stand der Technik keine Methoden bekannt, mittels derer PMMA-Schaumstoffe realisierbar wären, die eine Porengröße deutlich kleiner 1 mm aufweisen.

Einzig mit einem Autoklavenverfahren ohne besondere Zugabe eines Treibmittels sind kleine Porengrößen unterhalb 1 mm denkbar. Jedoch ist ein solches Verfahren apparativ sehr aufwendig und kaum für einen großen Produktionsdurchsatz geeignet.

Aus der Herstllung anderer Schaumstoffe, wie PMI-, PVC- oder PP-Schäumen ist bekannt, dass feine Poren während der Schäumung erhalten werden können über
a) eine hohe Nukleierungsrate, d.h. eine schnelle und hohe Übersättigung an Treibmittel oder
b) durch sogenannte Nukleierungsmittel (heterogene Nukleierung).

Hohe Nukleierungsraten erreicht man durch eine schnelle Übersättigung des Treibmittels in der Polymermatrix, z.B. durch einen quasi-instantanen Abfall des Umgebungsdruckes weit unter den Dampfdruck des Treibmittels bei der Schäumtemperatur oder durch eine sehr schnelle Temperaturerhöhung weit über die Siedetemperatur des Treibmittels. Beides ist in Bezug auf PMMA bei einem Verfahren, bei dem das Treibmittel vor der Polymerisation zugegeben wird, jedoch nicht in einem Maße möglich, dass die gewünschten Porengrößen erhalten würden. Dies ist u.a. auf die Schmelzviskosität des PMMA und auf die niedrige Ceiling-Temperatur des PMMA zurückzuführen. Weiterhin sind diese Ansätze apparativ sehr anspruchsvoll und ermöglichen bestenfalls Kleinproduktionen mit geringem Durchsatz.

Als Nukleierungsmittel zur heterogenen Nukleierung können z.B. feinteilige Substanzen eingesetzt werden. Diese Partikel erleichtern die Bildung von Poren. Hierbei ist jedoch zu beachten, dass diese Partikel auch einen gegenteiligen Effekt haben können, da sie die sich bildenden Zellwände bei der Schäumung zerstören, gewissermaßen "zerstechen" und so die Zellen durch Koaleszenz vergößert werden. Weiterhin können diese feinteiligen Partikel zu einer Verschlechterung der Fließfähigkeit des Matrixpolymers führen, was dem Aufschäumen entgegenwirkt. Insbesondere für PMMA sind daher keine geeigneten Nukleierungsmittel bekannt.

### Aufgabe

Aufgabe der vorliegenden Erfindung war es damit, ein neues Verfahren zur Herstellung von feinporigen PMMA-Schäumen mit einer mittleren, gemäß ASTM D 3576 bestimmten Porengröße kleiner 500 µm zur Verfügung zu stellen, das die diskutierten Nachteile des Standes der Technik nicht aufweist.

Das zentrale Ziel der vorliegenden Erfindung war es dabei, Nukleierungsmittel für die PMMA-Schäumung zu identifizieren, die zur Herstellung dieser sehr feinporigen PMMA-Schäume geeignet sind. Ziel war es also, ein geeignetes Nukleiierungsmittel zu finden, welches den Aufschäumprozess nicht behindert, möglichst gut, homogen und stabil in der Ansatzlösung dispergierbar ist sowie zu den oben genannten Porengrößen führt.

Insbesondere war es dazu Aufgabe der vorliegenden Erfindung, eine PMMA-Rezeptur zur Verfügung zu stellen, die einerseits gut aufzuschäumen ist und dabei hohe Freiheitsgrade bzgl. der Einstellung der Porengröße im Bereich kleiner Poren, der Porenverteilung und der Schaumdichte zulässt. Andererseits soll das Material als Schaum mechanisch sehr belastbar sein.

Dabei war es insbesondere Aufgabe der vorliegenden Erfindung, PMMA-Schaumstoffe zur Verfügung zu stellen, die eine gesamte Porengröße kleiner 500 µm und einer Dichte des Schaumstoffs kleiner 250 kg/m³ aufweisen.

Weiterhin soll in diesem Verfahren auf Treibmittel, die umweltschädlich bzw. toxisch sind bzw. ein hohes ODP (Ozon-Depletion-Potential), wie z.B. bei den meisten Halogenkohlenwasserstoffen der Fall, verzichtet werden.

Weitere nicht explizit genannte Aufgaben können sich aus dem Gesamtzusammenhang der Erfindung, den Ansprüchen, der Beschreibung oder den Beispielen ergeben.

### Lösung

Gelöst werden die Aufgaben durch ein neuartiges Verfahren zur Herstellung von PMMA-Schaumstoffen, bei dem die Herstellung der Schaumstoffe durch eine Polymerisation, wie zum Beispiel eine Plattenpolymerisation von Monomerrmischungen, enthaltend überwiegend MMA, bzw. eines Sirups aus einem überwiegend oder ganz aus MMA bestehenden Polymer und einer überwiegend oder ganz aus MMA zusammengesetzten Monomermischung in Gegenwart eines bei Polymerisationsbedingungen nicht-gasförmigen Treibmittels und eines Nukleierungsmittels erfolgen. In einem zweiten Schritt wird die so erhaltene, auspolymerisierte und mit Treibmittel beladene PMMA Platte dann durch Erwärmung aufgeschäumt, wobei durch die Zugabe des Nukleierungsmittels kleine und gleichmäßige Poren gebildet werden.

Dieses Verfahren ist insbesondere dadurch gekennzeichnet, dass es sich bei dem Nukleierungsmittel um Siliziumoxid-Partikel mit einem Durchmesser zwischen 4 und 1000 nm handelt. Die Zusammensetzung enthält dabei 0,01 bis 2,0 Gew%, bevorzugt 0,2 bis 1,5 Gew% eines oder mehrerer Initiatoren, 2 bis 20 Gew%, bevorzugt 3 bis 15 Gew% eines oder mehrerer Treibmittel, 0,2 bis 10 Gew%, bevorzugt 0,5 bis 8 Gew% der Siliziumoxid-Partikel mit dem Durchmesser zwischen 4 und 1000 nm , bevorzugt zwischen 5 und 500 nm und 70 bis 97,79 Gew%, bevorzugt 75 bis 97,8 Gew% einer Polymer-bildenden Mischung, wobei diese Polymer-bildenden Mischung zu mindesten 75 mol% aus MMA bzw. MMA-Wiederholungseinheiten besteht und zu 0 bis 80 Gew%, bevorzugt zu 0 bis 50 Gew% als Polymer und/oder Oligomer vorliegen kann. Diese Zusammensetzung wird zunächst bei einer Temperatur zwischen 20 °C und 100 °C, bevorzugt zwischen 30 °C und 70 °C polymerisiert und anschließend bei einer Temperatur zwischen 130 °C und 250 °C, bevorzugt zwischen 150 °C und 230 °C geschäumt. Neben den genannten Komponenten kann die Zusammensetzung bis zu 27,79 Gew% weiterer Komponenten enthalten. Beispiele für diese weiteren Komponenten sind insbesondere weitere Polymerkomponenten, bei denen es sich nicht um MMA-haltige Polymere handelt, UV-Stabilisatoren, Füllstoffe und Pigmente.

Bei den Siliziumoxid-Partikeln handelt es sich bevorzugt um SiO₂-Partikel. Jedoch ist es auch möglich, dass diese Partikel nicht genau die Stöchiometrie von 1 zu 2 aufweisen. So können insbesondere bei sehr kleinen Partikeln Abweichungen von der Stöchiometrie von bis zu 30% vorliegen. Auch kann Silizium zu bis zu 20% durch andere Metallionen, wie zum Beispiel Aluminium ersetzt sein. Erfindungsgemäß wichtig ist nur, dass das stöchiometrische Verhältnis von Silizium zu Sauerstoff zwischen 0,7 und 1,3 zu 2 liegt und dass es sich bei den nicht-Sauerstoffatomen im Partikel zu mindestens 80 mol% um Silizium handelt.

Die Polymer-bildenden Mischung kann neben dem MMA bis zu 25 Gew% weiterer Komponenten aufweisen. Bei diesen weiteren Komponenten kann es sich um mit MMA copolymerisierbare Monomere, Regler und/oder Vernetzer handeln. Dabei können das MMA und die copolymerisierbaren Monomere vollständig als Monomere eingesetzt werden. Die Polymer-bildenden Zusammensetzung kann insbesondere bis zu 0,5 Gew% Vernetzer und/oder bis zu 1,5 Gew% Regler enthalten.

In einer besser zu handhabenden Ausführungsform der Erfindung können das MMA und die copolymerisierbaren Monomere jedoch auch zu einem Anteil von bis zu 80 Gew%, bevorzugt zu maximal 50 Gew% als Polymer und/oder Oligomer vorliegen. Der Vorteil eines solchen Sirups, bestehend aus Monomeren und Polymeren bzw. Oligomeren, ist, dass dieser eine höhere Viskosität als eine reine Monomermischung aufweist und bei der Polymerisation einen geringeren Dampfdruck entwickelt.

Bei den mit MMA copolymerisierbaren Monomeren kann es sich insbesondere um Acrylate, wie insbesondere Methyl-, Ethyl-, Propyl- oder n-Butylacrylat handeln. Die Copolymerisation von Acrylaten stabilisiert den Schaumstoff insbesondere bei hohen Schäumungstemperaturen zusätzlich, da diese Schäumungstemperaturen oberhalb der Ceiling-Temperatur des reinen MMA liegen können. Für den Fall, dass keine stabilisierenden Comonomere eingebaut werden, ist eine kürzere Schäumungszeit oder eine entsprechend tiefere Schäumungstemperatur zu bevorzugen.

Weitere Beispiele für geeignete Comonomere sind (Meth)acrylsäure, Methacrylate, wie Ethylmethacrylat, Propylmethacryl, n-Butylmethacrylat, tert-Butyl(meth)acrylat, isoPropyl(meth)acrylat, iso-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe, ein Polyether(meth)acrylat, wobei der Polyether ein Molekulargewicht zwischen 200 und 5000 aufweisen kann. Die Comonomere können dabei auch als eine Mischung aus mindestens zwei dieser Comonomere vorliegen. Sollte es sich bei diesen Comonomeren um n-Butyl(meth)acrylat und/oder n-Propyl(meth)acrylat handeln, kann der Anteil dieser an der Gesamtzusammensetzung insgesamt 3 Gew% nicht überschreiten.

Wenn Vernetzer eingesetzt werden, handelt es sich bei diesen bevorzugt um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer.

Wenn Regler eingesetzt werden, handelt es sich bei diesen bevorzugt um eine Verbindung mit ein bis fünf Mercaptangruppen, um ein γ-Terpinen oder um eine Mischung aus mindestens zwei dieser Regler. Besonders bevorzugt handelt es sich bei dem Regler um Penta-erithrit-tetra-thioglycolat, 2-Mercaptoethanol, ein Alkylmercaptan mit 2 bis 12 Kohlenstoffatomen, Thyoclykolsäure, ein Thioglycolat, γ-Terpinen oder eine Mischung aus mindestens zwei dieser Regler.

Ein besonders wichtiger Aspekt der vorliegenden Erfindung ist die Verwendung der Nukleierungsmittel in der zu schäumenden Zusammensetzung. Diese gegenüber dem Stand der Technik neue Verwendung von Nukleierungsmitteln bei der Herstellung von PMMA-Schaumstoffen führt überraschend dazu, dass die PMMA-Schäume mit besonders kleinen und gleichmäßigen, sowie gleichmäßig verteilten Poren erhalten werden. Die so erhaltene Feinporigkeit ist für verschiedene Anwendungen von hoher Bedeutung. In Isolationsanwendungen steigt gemeinhin bei gleicher Dichte und gleichem Zellgas die Isolationswirkung mit sinkender Porengröße eines Schaumstoffen. In Leichtbauanwendungen, in denen harzgetränkte Deckschichten auf einen Schaumkern aufgebracht werden, ist eine geringe Harzaufnahme des Schaumkernes zur Gewichtseinsparung von Bedeutung. Je Feiner die Poren des hierfür verwendeten geschlossenzelligen Schaumstoffes sind, desto weniger Harz kann aufgenommen werden.

Es wurde überraschend gefunden, dass sich im Vergleich zu einem Schaum, welcher auf einer Basisrezeptur ohne Nukleierungsmittel basiert, ein deutlich feinporigerer Schaum erzielen lässt, wenn Siliziumoxid-Partikel eingesetzt werden. So kann zum Beispiel mit AEROSIL OX50 (der Firma EVONIK Industries AG) ein sehr feinporiger Schaum erhalten werden. Überraschender Weise wurde zudem gefunden, dass mit anderen, potentiell auch nukleierend wirkenden Additiven wie z.B. Talkumpulver, kein solcher Effekt erzielt wurde. Im Gegenteil wurde durch die Verwendung von Talkum ein Aufschäumen eher erschwert und es wurde ein sehr inhomogener Schaum erhalten. Auch der Einsatz von Al₂O₃-Partikeln (AEROXIDE ALU C der Fa. EVONIK Industries AG) lieferte keinen Erfolg, da ein Aufschäumen hier nicht möglich war. Dies zeigt, dass allein das Einbringen von beliebigen Partikeln in dem hier gezeigten Verfahren zur Herstellung von PMMA Schäumen, keine Porenverfeinerung im erwünschten Maß herbeiführt, sondern überraschend zunächst nur Siliziumoxid-Partikel dazu geeignet zu sein scheinen.

Weiterhin weisen die erfindungsgemäß hergestellten PMMA-Schaumstoffe eine überraschend hohe Festigkeit und gleichzeitig eine überraschend geringe Sprödigkeit auf und können daher z.B. Anwendung im Leichtbau finden. Weiterhin kann auf Grund der guten Materialeigenschaften auf den Einsatz von Weichmachern, wie z.B. längerkettigen Alkyl(meth)acrylaten oder Phthalaten, die sich nach bisherigen Erkenntnissen positiv auf die Fließfähigkeit bzw. die Schäumbarkeit auswirken, jedoch gleichzeitig die mechanischen Eigenschaften des PMMA-Schaumstoffes, insbesondere die Festigkeit, negativ beeinflussen, verzichtet werden.

Bei den insbesondere geeigneten Treibmitteln handelt es sich um tert-Butanol, n-Heptan, MTBE, Methylethylketon, einen Alkohol mit ein bis vier Kohlenstoffatomen, Wasser, Methylal, Harnstoff, iso-Propyl(meth)acrylat und/oder tert-Butyl(meth)acrylat. Dabei sind bei der Verwendung von isoPropyl(meth)acrylat und/oder tert-Butyl(meth)acrylat diese gleichzeitig Bestandteil der aufgeführten Monomerzusammensetzung und werden zunächst in die bei der Polymerisation gebildeten Polymere ganz oder teilweise einpolymerisiert. Bei der Schäumung werden darauf unter Abspaltung von Propen bzw. iso-Buten im Polymer (Meth)acrylsäure-Wiederholungseinheiten gebildet. In einer besonderen Ausführungsform können auch Polymere verwendet werden, die aus großen Anteilen dieser Monomere oder komplett aus diesen Monomeren hergestellt wurden. Durch die Verwendung solcher einpolymerisierbaren bzw. polymerisierten, Treibmittel freisetzende Comonomere ist es beispielsweise möglich, besonders kleine und regelmäßige Poren zu erhalten.

Besonders geeignete Treibmittel sind tert-Butyl(meth)acrylat, iso-Propyl(meth)acrylat, tert-Butanol, iso-Propanol, tert-Butylmethylether und Poly(tert-butyl(meth)acrylat).

Die Polymerisation erfolgt bevorzugt in einem formgebenden Gefäß, insbesondere in Form einer Kammerpolymerisation zwischen zwei Platten, wie z.B. Glasplatten. Dabei kann es sich beispielswiese im einfachsten Fall um eine rechteckige Wanne handeln. Durch die Polymerisation in einer solchen Wanne erhält man später eine Platte, deren Dicke durch den Füllstand der Wanne bzw. den Plattenabstand bestimmt wurde. Darüber hinaus sind jedoch auch komplexere Formen als Gefäß denkbar. Bevorzugt erfolgt die Polymerisation bei einer Temperatur zwischen 30 und 70 °C. Dabei können als Initiatoren neben allgemein bekannt Radikalstartern, wie zum Beispiel Peroxide oder Azoinitiatoren, auch Redoxsysteme oder UV-Initiatoren eingesetzt werden. Dabei betreffen die Polymerisationstemperaturen unterhalb von 40 °C insbesondere diese RedoxSysteme und UV-Initiatoren. Die UV-Initiatoren werden durch Bestrahlung mit entsprechenden UV-Licht initiiert, während es sich bei den Redox-Initatoren um Zweikomponentensysteme handelt, deren Initiierung durch Mischen der beiden Komponenten und der Monomere erfolgt.

Das Schäumen kann anschließend in dem gleichen Gefäß erfolgen, wobei die Volumenzunahme in diesem Fall auf eine Richtung, die offene Seite des Gefäßes beschränkt wird. Das polymerisierte Material kann jedoch auch freiliegend aufgeschäumt werden. Bevorzugt erfolgt das Schäumen in einem Ofen. Alternativ ist es auch möglich, das Schäumen durch Bestrahlung mit IR-Strahlung, insbesondere mit einer Wellenlänge zwischen 0,78 und 2,20, bevorzugt zwischen 1,20 und 1,40 µm, zu bewirken. Eine weitere Alternative stellt das Aufschäumen mit Mikrowellen dar. Auch die Kombination aus verschiedenen Methoden, wie IR-Strahlung, Mikrowellen und/oder Heizen in einem Ofen ist denkbar.

Sowohl das Schäumen als auch die zuvor erfolgte Polymerisation können jeweils in mehreren Temperaturstufen erfolgen. Bei der Polymerisation kann durch eine spätere Erhöhung der Temperatur zusätzlich der Umsatz gesteigert und der Restmonomergehalt damit verringert werden. Beim Schäumen kann durch eine stufenweise Erhöhung der Schäumungstemperatur die Porenverteilung, die Porengröße und die Anzahl der Poren beeinflusst werden.

Optional kann das Verfahren auch derart durchgeführt werden, dass die Polymerisation nur unvollständig, in diesem Fall bevorzugt zu einem Umsatz von mindestens 80% durchgeführt wird und die endgültige Auspolymerisation beim Schäumen erfolgt. Ein solches Verfahren hat den Vorteil, dass zu Beginn des Schaumvorgangs die kürzeren Polymerketten und die verbliebenen Monomere einen weichmachenden Effekt haben, ohne dass im fertigen Schaumstoff eine weichmachende Verbindung verbleiben würde. Somit würde bei einer solchen Ausführungsform die Polymerisation und das Schäumen teilweise - bei einer Schäumungstemperatur - simultan erfolgen.

Neben dem erfindungsgemäßen Verfahren sind auch PMMA-Schaumstoffe, die über ein solches Verfahren beispielsweise herstellbar sind, Bestandteil der vorliegenden Erfindung. Ein solcher PMMA-Schaumstoff ist dabei dadurch gekennzeichnet, dass der Feststoffanteil dieses Schaums 72 bis 98 Gew% eines Polymer, aufweisend mindestens 75 mol% MMA-Wiederholungseinheiten, und 0,2 bis 12,5 Gew% Siliziumoxid-Partikel aufweist. Weiterhin weist der Schaumstoff eine Dichte zwischen 25 und 250 kg/m³, bevorzugt zwischen 40 und 250 kg/m³, und eine durchschnittliche Porengröße kleiner 500 µm auf. Bevorzugt ist die gesamte Porengröße kleiner 500 µm. Dies bedeutet, dass keine Poren mit einem Durchmesser größer 500 µm vorliegen.

Die Porengröße wird in Anlehnung an die Norm ASTM D 3576 mit folgenden Abweichungen von dieser Norm bestimmt: Zunächst wird kein Messerschnitt des PMMA-Schaumstoffs, sondern eine Bruchkante desselben betrachtet. Weiterhin erfolgt die Auswertung aufgrund der relativ kleinen Poren nicht mittels eines Lichtmikroskops, sondern über eine REM-Messung. Die Berechnung der Porengröße aus den erhaltenen Bildern ist dabei aber Normgerecht.

Bevorzugt sind insbesondere PMMA-Schaumstoffe, in denen das Polymer ausschließlich aus MMA, einem Initiator, einem oder mehreren Vernetzern, ausgewählt aus di-, tri- oder tetra-(Meth)acrylaten, Allyl(meth)acrylat, Triallylcyanurat und/oder Triallylisocyanurat, und einem oder mehreren Reglern, ausgewählt aus Verbindungen mit ein bis fünf Mercaptangruppen und/oder γ-Terpinen, bevorzugt ausgewählt aus Penta-erithrit-tetra-thioglycolat, 2-Mercaptoethanol, Alkylmercaptanen mit 2 bis 12 Kohlenstoffatomen, Thyoclykolsäure, Thioglycolat und/oder γ-Terpinen, gebildet wurde.

Die erfindungsgemäß hergestellten PMMA-Schaumstoffe sowie die erfindungsgemäßen PMMA-Schaumstoffe können vielfältig Verwendung finden. Beispiele für solche Verwendungen sind witterungsbeständige Isolationsmaterialien, Kernmaterial für Sandwich Composites, im Leichtbau, als Verpackungsmaterial, als Energieabsorber in Crashelementen, in architektonischen Bauelementen, als Diffusor in lichttechnischen Anwendungen, im Möbelbau, im Bootsbau, im Fahrzeugbau, in der Luftfahrtindustrie oder im Modellbau.

### Beispiele

### Beispiel 1

In diesem Beispiel wurde mit einem einpolymerisierten Treibmittel geschäumt.

Eine Mischung aus 266,25 g eines Polymethacrylats, hergestellt ausschließlich aus MMA, 1065,00 g MMA, 0,75 g 2,2'-Azobis-(2,4-dimethylvaleronitril), 0,60 g Pentaerythrittetrathioglycolat als Regler, 15,00 g n-Butylacrylat, 105,00 g tert-Butylmethacrylat, 1,50 g Rewopol SB-DO 75 als Trennmittel und 0,90 g Ethylenglycoldimethacrylat als Vernetzer wurde hergestellt. In diese Mischung wurden anschließend 45,00 g AEROSIL OX50 als Nukleierungsmittel eingerührt, wobei nach der vollständigen Zugabe für weitere 20 min gerührt und darauf mit Hilfe eines UltraTurrax dispergiert (2 min bei 3000 rpm, 1 min bei 5000 rpm) wurde. Anschließend wurde diese Mischung zwischen zwei seitlich mit einem Gummistreifen abgedichteten Glasplatten der Abmessungen 400 mm * 300 mm und einem Abstand zueinander von 10 mm für 24 h bei 42 °C polymerisiert. Darauf erfolgte 4 h Tempern bei 115 °C. Nach Entfernen der Glasplatten wurde schließlich die erhaltene PMMA-Platte 1,5 h bei 215 °C in einem Ofen geschäumt. Die Mischung schäumte sehr gut und die Poren waren gleichmäßig verteilt. Der erhaltene Schaum hatte bei einer Dichte von ca. 100 kg/m³ sehr feine Poren mit einem durchschnittlichen Durchmesser von 250 µm.
Das Trennmittel hat erfahrungsgemäß keinen Einfluss auf die Polymerisation oder den Schäumvorgang und dient einzig zur leichteren Entfernung der Glasplatten von dem Polymerblock.

### Beispiel 2

In diesem Beispiel wurde mit einem nicht einpolymerisierten Treibmittel geschäumt und die Menge an Nukleierungsmittel verdoppelt.

Eine Mischung aus 257,25 g eines Polymethacrylats, hergestellt ausschließlich aus MMA, 1029,00 g MMA, 0,75 g 2,2'-Azobis-(2,4-dimethylvaleronitril), 0,60 g Pentaerythrittetrathioglycolat als Regler, 15,00 g n-Butylacrylat, 105,00 g tert-Butylmethylether (MTBE), 1,50 g Rewopol SB-DO 75 als Trennmittel und 0,90 g Ethylenglycoldimethacrylat als Vernetzer wurde hergestellt. In diese Mischung wurden anschließend 90,00 g AEROSIL OX50 als Nukleierungsmittel eingerührt, wobei nach der vollständigen Zugabe für weitere 20 min gerührt und darauf mit Hilfe eines UltraTurrax dispergiert (2 min bei 3000 rpm, 1 min bei 5000 rpm) wurde. Anschließend wurde diese Mischung zwischen zwei seitlich mit einem Gummistreifen abgedichteten Glasplatten der Abmessungen 400 mm * 300 mm und einem Abstand zueinander von 10 mm für 24 h bei 42 °C polymerisiert. Darauf erfolgte 4 h Tempern bei 115 °C. Nach Entfernen der Glasplatten wurde schließlich die erhaltene PMMA-Platte 20 min bei 200 °C in einem Ofen geschäumt. Die Mischung schäumte sehr gut und die Poren waren gleichmäßig verteilt. Der erhaltene Schaum hatte bei einer Dichte von ca. 100 kg/m³ sehr feine Poren mit einem durchschnittlichen Durchmesser von 100 µm.

### Vergleichsbeispiel 1

In diesem Vergleichsbeispiel wurde im direkten Vergleich zu Beispiel 1 auf ein Nukleierungsmittel verzichtet.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g tert-Butylmethacrylat, 1,50 g Rewopol SB-DO 75 als Trennmittel und 0,90 g Ethylenglycoldimethacrylat als Vernetzer wurde hergestellt. Diese Mischung wurden anschließend 20 min gerührt. Daraufhin wurde diese Mischung zwischen zwei seitlich mit einem Gummistreifen abgedichteten Glasplatten der Abmessungen 400 mm * 300 mm und einem Abstand zueinander von 10 mm für 24 h bei 42 °C polymerisiert. Darauf erfolgte 4 h Tempern bei 115 °C. Nach Entfernen der Glasplatten wurde schließlich die erhaltene PMMA-Platte 1 Stunde bei 215 °C in einem Ofen geschäumt. Die Mischung schäumte sehr gut. Jedoch waren die Poren ungleichmäßig verteilt und grob. Der durchschnittliche Durchmesser der Poren im erhaltenen Schaum war ca. 2000 µm.

### Vergleichsbeispiel 2

In diesem Vergleichsbeispiel wurde im direkten Vergleich zu Beispiel 2 auf ein Nukleierungsmittel verzichtet.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g tert-Butylmethylether (MTBE), 1,50 g Rewopol SB-DO 75 als Trennmittel und 0,90 g Ethylenglycoldimethacrylat als Vernetzer wurde hergestellt. Diese Mischung wurden anschließend 20 min gerührt. Daraufhin wurde diese Mischung zwischen zwei seitlich mit einem Gummistreifen abgedichteten Glasplatten der Abmessungen 400 mm * 300 mm und einem Abstand zueinander von 10 mm für 24 h bei 42 °C polymerisiert. Darauf erfolgte 4 h Tempern bei 115 °C. Nach Entfernen der Glasplatten wurde schließlich die erhaltene PMMA-Platte 1 Stunde bei 215 °C in einem Ofen geschäumt. Die Mischung schäumte sehr gut. Jedoch waren die Poren ungleichmäßig verteilt, der Schaum äußerst inhomogen und grobporig. Der durchschnittliche Durchmesser der Poren im erhaltenen Schaum war relevant größer 2000 µm.

### Vergleichsbeispiel 3

In diesem Vergleichsbeispiel wurde im direkten Vergleich zu Beispiel 2 ein nicht erfindungsgemäßes Nukleierungsmittel verwendet.

Eine Mischung aus 272,25 g eines Polymethacrylats, hergestellt ausschließlich aus MMA, 1089,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g tert-Butylmethylether (MTBE), 1,50 g Rewopol SB-DO 75 als Trennmittel und 0,90 g Ethylenglycoldimethacrylat als Vernetzer wurde hergestellt. In diese Mischung wurden anschließend 45,00 g Finntalc M03-AW (ein Talkumpulver) als Nukleierungsmittel eingerührt, wobei nach der vollständigen Zugabe für weitere 20 min gerührt und darauf mit Hilfe eines UltraTurrax dispergiert (2 min bei 3000 rpm, 1 min bei 5000 rpm) wurde. Anschließend wurde diese Mischung zwischen zwei seitlich mit einem Gummistreifen abgedichteten Glasplatten der Abmessungen 400 mm * 300 mm und einem Abstand zueinander von 10 mm für 24 h bei 42 °C polymerisiert. Darauf erfolgte 4 h Tempern bei 115 °C. Nach Entfernen der Glasplatten wurde schließlich die erhaltene PMMA-Platte 1 Stunde bei 215 °C in einem Ofen geschäumt. Die Mischung schäumte äußerst langsam und ungleichmäßig. Weiterhin waren die Poren ungleichmäßig verteilt, der Schaum äußerst inhomogen und grobporig. Der durchschnittliche Durchmesser der Poren im erhaltenen Schaum war ca. 2000 µm.

## Patentansprüche

1. Verfahren zur Herstellung eines Polymethacrylat-Schaumstoffs, **dadurch gekennzeichnet, dass** eine Zusammensetzung, enthaltend 0,01 bis 2,0 Gew% eines Initiators, 2 bis 20 Gew% eines Treibmittels, 0,2 bis 10 Gew% Siliziumoxid-Partikel mit einem Durchmesser zwischen 4 und 1000 nm und 70 bis 97,79 Gew% einer Polymer-bildenden Mischung, wobei die Polymer-bildenden Mischung zu mindesten 75 mol% aus MMA bzw. MMA-Wiederholungseinheiten besteht und zu 0 bis 80 Gew% als Polymer und/oder Oligomer vorliegen kann, bei einer Temperatur zwischen 20 °C und 100 °C polymerisiert und anschließend zwischen 130 °C und 250 °C geschäumt wird.

2. Verfahren gemäß Anspruch 1, **dadurch gekennzeichnet, dass** die Zusammensetzung 0,5 bis 8 Gew% SiO₂-Partikel mit einem Durchmesser zwischen 5 und 500 nm enthält.

3. Verfahren gemäß Anspruch 1 oder 2, **dadurch gekennzeichnet, dass** die Zusammensetzung 0,2 bis 1,5 Gew% des Initiators, 3 bis 15 Gew% des Treibmittels, 0,5 bis 8 Gew% SiO₂-Partikel und 75 bis 97,8 Gew% der Polymer-bildenden Mischung enthält, wobei die Polymer-bildenden Mischung zu mindesten 75 mol% aus MMA besteht und zu 0 bis 50 Gew% als Polymer und/oder Oligomer vorliegt.

4. Verfahren gemäß mindestens einem der Ansprüche 1 bis 3, **dadurch gekennzeichnet, dass** die Polymerisation bei einer Temperatur zwischen 30 °C und 70 °C und das Schäumen bei einer Temperatur zwischen 150 °C und 230 °C erfolgen.

5. Verfahren gemäß mindestens einem der Ansprüche 1 bis 4, **dadurch gekennzeichnet, dass** die Polymer-bildenden Zusammensetzung bis zu 0,5 Gew% Vernetzer und/oder bis zu 1,5 Gew% Regler enthält.

6. Verfahren gemäß mindestens einem der Ansprüche 1 bis 5, **dadurch gekennzeichnet, dass** die Polymer-bildenden Mischung mit MMA copolymerisierbare Comonomere und/oder einpolymerisierte Comonomere in den Polymeren und/oder Oligomeren enthält, und dass es sich bei den Comonomeren um (Meth)acrylsäure, Methylacrylat, Ethyl(meth)acrylat, Propyl(meth)acryl, n-Butyl(meth)acrylat, tert-Butyl(meth)acrylat, iso-Propyl(meth)acrylat, iso-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe oder um Mischungen aus mindestens zwei dieser Comonomere handelt.

7. Verfahren gemäß mindestens einem der Ansprüche 1 bis 6, **dadurch gekennzeichnet, dass** die Polymerisation und/oder die Schäumung stufenweise bei unterschiedlichen Temperaturen erfolgen.

8. Verfahren gemäß mindestens einem der Ansprüche 1 bis 7, **dadurch gekennzeichnet, dass** die Polymerisation und das Schäumen zumindest teilweise simultan erfolgen.

9. Verfahren gemäß mindestens einem der Ansprüche 1 bis 8, **dadurch gekennzeichnet, dass** es sich es sich bei dem Treibmittel tert-Butyl(meth)acrylat, iso-Propyl(meth)acrylat, tert-Butanol, tert-Butylmethylether, iso-Propanol und Poly(tert-butyl(meth)acrylat) handelt, wobei iso-Propyl(meth)acrylat und/oder tert-Butyl(meth)acrylat gleichzeitig Bestandteil der aufgeführten Monomerzusammensetzung sind und in die daraus gebildeten Polymere ganz oder teilweise einpolymerisiert werden.

10. PMMA-Schaum, **dadurch gekennzeichnet, dass** der Feststoffanteil dieses PMMA-Schaums 0,2 bis 12,5 Gew% Siliziumoxid -Partikel und 72 bis 98 Gew% eines Polymers, aufweisend mindestens 75 mol% MMA-Wiederholungseinheiten, enthält, und dass der Schaum eine Dichte zwischen 25 und 250 kg/m³ und eine durchschnittliche Porengröße kleiner 500 µm aufweist.

11. PMMA-Schaum gemäß Anspruch 10, **dadurch gekennzeichnet, dass** der PMMA-Schaum eine gesamte Porengröße kleiner 500 µm aufweist.
